# EUROPÄISCHE PATENTSCHRIFT

(11) **EP 1 847 867 B1**
(45) Veröffentlichungstag und Bekanntmachung des Hinweises auf die Patenterteilung: **12.05.2010**
(21) Anmeldenummer: 07006792.1
(22) Anmeldetag: 31.03.2007
(51) Int. Cl.: G02B 27/34, F41G 1/34, F41G 1/38, G02B 6/00, C03C 21/00

(54) **Beleuchtete Zielvorrichtung für ein Beobachtungsgerät**
Illuminated aiming device for an observation instrument
Repère de visée éclairé pour un appareil de surveillance

(30) Priorität: 19.04.2006 DE 102006018967
(43) Veröffentlichungstag der Anmeldung: 24.10.2007
(73) Patentinhaber: Carl Zeiss Sports Optics GmbH, 35576 Wetzlar (DE)
(72) Erfinder: Schreiter, Gerd, Dr., 35781 Weilburg (DE); Possner, Torsten, Dr., 07745 Jena (DE)
(74) Vertreter: Witte, Weller & Partner

(56) Entgegenhaltungen:
- EP-A1- 0 718 585
- EP-A2- 0 886 163
- JP-A- 2 100 219
- JP-U- 02 100 219
- NAUMANN/SCHROEDER ED - NAUMANN H ET AL: "Bauelemente der technischen Optik" BAUELEMENTE DER OPTIK. TASCHENBUCH DER TECHNISCHEN OPTIK, MUNCHEN, CARL HANSER VERLAG, DE, 1992, Seiten 419-423, XP002146704

## Beschreibung

Die Erfindung betrifft eine beleuchtete Zielvorrichtung für ein Beobachtungsgerät mit einer Strichplatte, einer an der Strichplatte angeordneten Zielmarke und einer Lichtquelle, die über einen Lichtleiter auf die Zielmarke gerichtet ist, wobei die Strichplatte aus Glas besteht, ferner die Zielmarke im Bereich des Lichtleiters in die Strichplatte eingearbeitet ist und das Licht der Lichtquelle an Grenzflächen des Lichtleiters totalreflektiert wird

Eine Zielvorrichtung der vorstehend genannten Art ist aus dem Dokument Naumann/Schroeder, "Bauelemente der technischen Optik", BAULEMENTE DER OPTIK. TASCHENBUCH DER TECHNISCHEN OPTIK, München, Carl Hanser Verlag, DE, 1992, Seiten 419-423 bekannt.

Zielvorrichtungen für Zielfernrohre weisen üblicherweise im Strahlengang des Zielfernrohrs eine quer zur optischen Achse angeordnete gläserne Strichplatte auf, in die eine Zielmarke, das so genannte Absehen, eingebracht ist, beispielsweise durch Einätzen oder durch Eingravieren. Die Zielmarke kann unterschiedliche Gestalt haben, beispielsweise die Gestalt eines Punktes, eines oder mehrerer Striche, eines Fadenkreuzes oder dergleichen.

Es ist in diesem Zusammenhang bekannt, die Zielmarke mit einer Lichtquelle zu beleuchten, ("Leuchtabsehen"), um auch bei schlechten Lichtverhältnissen genau zielen zu können.

Aus der DE 100 51 448 A1 ist eine beleuchtete Strichplatte bekannt. Dabei ist ein nahezu ringförmiger Lichtleiter um die Strichplatte herum angeordnet. Über eine Abflachung des Lichtleiters wird Licht einer Diode in den Lichtleiter eingestrahlt und gleichmäßig über den gesamten Umfang der Strichplatte eingekoppelt.

Aus dem Dokument DE 299 03 989 U1 ist ein Absehen in einem Fernrohr bekannt, das, vom Objektiv des Fernrohrs her gesehen, auf der Rückseite eines Strahlenteilers angeordnet ist. Über der Oberseite des oberen Prismas des Strahlenteilers befindet sich eine Blende und oberhalb der Blende eine Lichtquelle, nämlich eine Leuchtdiode. Der durch die Blende begrenzte Lichtstrahl trifft als Zielmarke, beispielsweise als Lichtpunkt, auf die Kontaktfläche der Prismen.

Bei einer Zielvorrichtung gemäß dem Dokument DE 197 26 397 A1 (= EP 0 886 163 A2) wird das Licht ebenfalls von der Schmalseite der Strichplatte her eingestrahlt und mittels einer Ausführung der Markierung als Wechsel von transparenten Lücken und opaken Stegen senkrecht zur Oberfläche abgestrahlt.

Diesen bekannten Zielvorrichtungen ist unter anderem der Nachteil gemeinsam, dass die Lichtausbeute schlecht ist. Bei manchen Zielvorrichtungen tritt auch erhebliches Streulicht auf, so dass die Gefahr besteht, dass das Bild des Zielobjekts bei schlechten Lichtverhältnissen überstrahlt wird. Ferner ist die Ausgestaltung möglicher Zielmarken beschränkt.

Aus dem Dokument WO 03/040800 A1 ist ein beleuchtetes Absehen bekannt. Hierfür wird eine kreisförmige, transparente Platte verwendet, in die ein Fadenkreuz eingeätzt und die beidseitig mit einer Antireflexbeschichtung versehen ist. Die Platte wird von der Schmalseite her mit Lichtleitern beleuchtet.

Das Dokument US 5 157 839 A beschreibt eine beleuchtete Visiereinrichtung für einen Bogen. Diese Einrichtung besteht ebenfalls aus einer transparenten, kreisförmigen Platte, die hier teilweise beschichtet und in deren rückseitiger Mitte ein Punkt als Zielmarke angebracht ist. Die Platte wird ebenfalls von der Seite her über Lichtleiter beleuchtet.

Bei diesen beiden bekannten Absehen wird zwar das von den Lichtleitern seitlich in die Platte eingestrahlte Licht an der Beschichtung reflektiert, die Lichtausbeute am Ort der Zielmarke ist aber nicht ausreichend.

Das Dokument DE 94 20 382 U1 beschreibt ein Zielfernrohr mit leuchtendem Absehen. Dabei wird eine Strichplatte verwendet, die aus einer kreisscheibenförmigen Glasplatte gearbeitet ist. Die Strichplatte besteht aus einem Ring, von dem drei Glasstege nach innen abstehen und sich in radialer Richtung, jeweils um 90° in Umfangsrichtung versetzt, vom Ring bis nahe zum Mittelpunkt des Rings erstrecken. Dadurch entsteht eine Zielmarke ähnlich dem so genannten "Absehen Nr. 1". Die Glasstege werden vom Ring her beleuchtet. An seinem freien Ende ist der mittlere Glassteg angespitzt und an der Spitze abgeflacht, so dass die abgeflachten Enden das eingestrahlte Licht in axialer Richtung aussenden. Der Schütze nimmt dies als leuchtende Pfeilspitze wahr.

Bei dieser bekannten Zielvorrichtung ist zwar die Lichtausbeute besser, die im Blickfeld des Schützen liegenden Glasstege sind jedoch störend. Außerdem stellt die Strichplatte ein äußerst zerbrechliches Gebilde dar, das kaum unter rauen Bedingungen einsetzbar ist, wie sie beim Einsatz von Zielfernrohren auftreten. Ferner müssten die Glasstege mit polierten Oberflächen hergestellt werden, weil ansonsten ein unkontrollierter Lichtaustritt an den Oberflächen der Glasstege stattfindet, der zu erheblichem Streulicht führt. Eine Polierbearbeitung ist jedoch bei der filigranen Struktur der Strichplatte nicht möglich.

Aus dem Dokument Poßner, T. et al. "Special glass for integrated and microoptics", Glastechnische Berichte 64 (1991) S. 185-190 sowie aus dem Dokument Kaps et al. "Ion exchange in an alumoborosilicate glass especially developed for multimode integrated optical elements", Proc. SPIE Vol. 1128 (1989) S. 132 Glasses for Optoelectronics sind optische Streifenwellenleiter bekannt.

Aus dem eingangs genannten Dokument Naumann/Schroeder, "Bauelemente der technischen Optik", BAULEMENTE DER OPTIK. TASCHENBUCH DER TECHNISCHEN OPTIK, München, Carl Hanser Verlag, DE, 1992, Seiten 419-423 ist eine Strichplatte aus einem transparenten Werkstoff bekannt. In die Strichplatte sind Striche graviert oder geätzt. Der Rand der Strichplatte ist bis auf eine Lücke verspiegelt. Seitlich neben der Strichplatte befindet sich eine Lichtquelle, die aus einer Mikro-Glühlampe oder einer Faseroptik besteht. Das von der Lichtquelle ausgehende Licht gelangt durch die Lücke in das Innere der Strichplatte, die als Lichtleiter wirkt. Dadurch leuchten die Striche auf.

Der Erfindung liegt demgegenüber die Aufgabe zugrunde, eine Zielvorrichtung der eingangs genannten Art dahingehend weiterzubilden, dass die vorgenannten Nachteile vermieden werden. Insbesondere soll die Zielvorrichtung mit einem Minimum an Lichtleistung auskommen, ohne Streulicht arbeiten und unterschiedlichste Gestaltungen von Zielmarken zulassen.

Bei einer Zielvorrichtung der eingangs genannten Art wird diese Aufgabe erfindungsgemäß dadurch gelöst, dass der Lichtleiter als Schichtwellenleiter oder Streifenwellenleiter durch Ionenaustausch im Glas der Strichplatte erzeugt ist.

Die der Erfindung zugrunde liegende Aufgabe wird auf diese Weise vollkommen gelöst.

Durch die Verwendung eines in die Strichplatte integrierten Lichtleiters wird nämlich praktisch das gesamte Licht der Leuchte an den Ort der Zielmarke gebracht. Es kann daher eine ausreichende Beleuchtung alleine der Zielmarke mit geringer Leistung erreicht werden. Streulicht oder gar eine Überstrahlung des Zielbildes sind nicht zu befürchten, weil das Licht der Lichtquelle an den Grenzflächen des Lichtleiters totalreflektiert wird und daher nicht seitlich austreten kann. Die Gestaltung der Zielmarke kann beliebig gewählt und in bekannter Technik beispielsweise durch Ätzen oder Gravieren hergestellt werden.

Bei einem bevorzugten ersten Ausführungsbeispiel der Erfindung ist der Wellenleiter in einer breiten Seite der Strichplatte vorbestimmter Breite ausgebildet.

Bei einem alternativen, zweiten Ausführungsbeispiel der Erfindung hingegen ist der Wellenleiter in einer breiten Seite der Strichplatte vorbestimmter Breite und Höhe ausgebildet.

In diesem Falle ist besonders bevorzugt, wenn die Höhe sich in Längsrichtung des Streifenwellenleiters ändert. Insbesondere kann der Streifenwellenleiter dabei als so genanntes Koppelhorn mit zu der Zielmarke hin abnehmender Höhe ausgebildet sein.

Diese Maßnahme hat den Vorteil, dass das Licht von der an der Stirnseite angebrachten Lichtquelle optimal in den Streifenwellenleiter eingekoppelt werden kann.

Diese beiden Alternativen ermöglichen es, je nach zu treibendem Aufwand eine bestimmte Lichtführung von der Lichtquelle zu der Zielmarke zur realisieren.

Erfindungsgemäß wird in an sich bekannter Weise die Lichtquelle an eine Schmalseite der Strichplatte angeschlossen.

Die Zielmarke kann in die Strichplatte eingearbeitet, insbesondere eingeätzt oder eingraviert sein.

Ausführungsbeispiele der Erfindung sind in der Zeichnung dargestellt und werden in der nachfolgenden Beschreibung näher erläutert. Es zeigen:
- Figur 1:: eine perspektivische und äußerst schematische Ansicht (nicht maßstäblich) eines ersten Ausführungsbeispiels einer erfindungsgemäßen Zielvorrichtung; und
- Figur 2:: eine Darstellung ähnlich Figur 1 für ein zweites Ausführungsbeispiel der Erfindung.

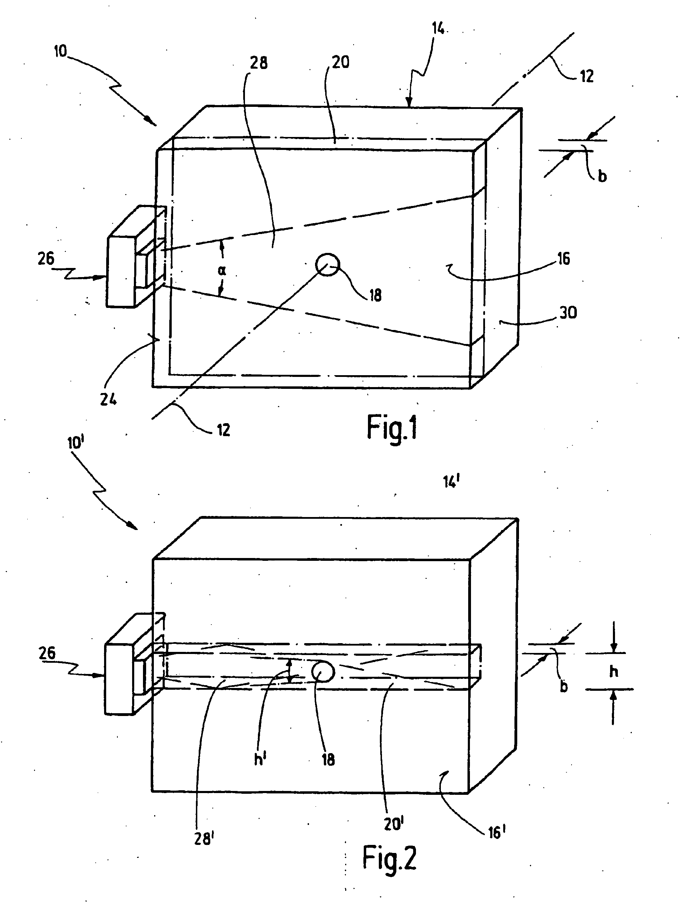

In Figur 1 bezeichnet 10 als ganzes ein erstes Ausführungsbeispiel einer erfindungsgemäßen Zielvorrichtung. Die Zielvorrichtung 10 ist in einem optischen oder digitalen Beobachtungsgerät, vorzugsweise in einem Zielfernrohr untergebracht (nicht dargestellt). Die optische Achse des optischen Gerätes ist mit 12 bezeichnet.

In der optischen Achse 12 und quer dazu angeordnet befindet sich eine Strichplatte 14. Die Strichplatte 14 ist an ihrer in Figur 1 vorne gezeichneten breiten Vorderseite 16 mit einer Zielmarke 18 versehen. Wenn die Zielvorrichtung 10 sich in einem Zielfernrohr befindet, weist die Vorderseite 16 der Strichplatte 14 dem Objektiv des Zielfernrohrs zu.

Die Zielmarke 18 ist in Figur 1 als Punkt eingezeichnet. Dies ist jedoch nur als Beispiel zu verstehen. Die Zielmarke 18 kann beliebige Gestalt haben, also beispielsweise die Gestalt eines Strich- oder Kreismusters, eines Fadenkreuzes usw. Die Zielmarke 18 ist in die Vorderseite 16 der Strichplatte 14 eingebracht, beispielsweise durch Ätzen, maskenbasiertes Ätzen mit Ionenstrahlen, nasschemisches Ätzen, Schneiden von Rillen oder Strukturen, Gravieren oder Lasergravieren und kann ggf. auch weiß ausgelegt sein, wie das an sich bekannt ist.

In die Strichplatte 14 ist im Bereich der Vorderseite ein Schichtwellenleiter 20 eingearbeitet, der im dargestellten Ausführungsbeispiel die gesamte Vorderseite überdeckt und eine Tiefe b aufweist. Dieser Schichtwellenleiter ist in dem Werkstoff der Strichplatte 14 durch ein geeignetes Verfahren erzeugt worden. Ein derartiger Lichtleiter wird durch Ionenaustausch im Glas in einer Tiefe b von der Vorderseite 16 erzeugt.

An der in Figur 1 linken Schmalseite der Strichplatte 14 ist auf eine dortige rechte Seitenfläche 24 eine Lichtquelle 26 aufgesetzt. Die Lichtquelle 26 kann eine Leuchtdiode (LED), eine Laserdiode oder eine andere Lichtquelle sein. Die Lichtquelle kann direkt mit ihrer Stirnfläche an die Seitenfläche 24 angekoppelt werden. Alternativ ist auch eine Ankopplung über eine Mikrooptik mit Linsen möglich oder eine Ankopplung über Glas- oder Kunststoffwellenleiter von einem von der Strichplatte 14 entfernten Ort.

Die Lichtquelle 26 strahlt einen Lichtstrahl 28 von der Seite in den Schichtwellenleiter 20 hinein, und zwar mit einem Öffnungsraumwinkel a, der von der Ausgangsoptik der Lichtquelle 26 und dem Übergang in den Schichtwellenleiter 20 abhängt. Der Lichtstrahl 28 breitet sich in dem Schichtwellenleiter durch Totalreflektion (Wellenleitung) aus.

Der Lichtstrahl 28 beleuchtet von der Seite her die Zielmarke 18, die durch Streuung des Lichtstrahls 28 für den Schützen als deutlich leuchtende Figur erscheint. Der Lichtstrahl 28 ist in Richtung der optischen Achse 12, also insoweit quer zu seiner Ausbreitungsrichtung, durch die Grenzflächen zum Glas der Strichplatte (hinten) bzw. der umgebenden Luft (vorne) begrenzt. Er kann lediglich auf der der linken Seitenfläche 24 gegenüberliegenden rechten Seitenfläche 30 des Schichtwellenleiters 20 austreten, wo aus diesem Grunde zweckmäßigerweise eine Lichtfalle angebracht ist (nicht dargestellt)

Das Ausführungsbeispiel von Figur 2 zeigt eine Variante, bei dem gleiche Bezugszeichen wie in Figur 1 verwendet und modifizierte Elemente durch den Zusatz eines Apostrophs gekennzeichnet sind.

Bei diesem Ausführungsbeispiel ist in die Vorderseite 16' der Strichplatte 14' ein Streifenwellenleiter 20' einer Breite b und einer Höhe h eingebracht, der die Ausbreitung des Lichtstrahls 28' in der Darstellung von Figur 2 zusätzlich nach oben und nach unten begrenzt. Der Streifenwellenleiter 20' kann beispielsweise Querabmessungen von 50 x 50 µm aufweisen. Dadurch wird die Ausbeute des Lichtstrahls 28' am Ort der Zielmarke 18 im Vergleich zu dem Ausführungsbeispiel von Figur 1 noch weiter erhöht, weil der Lichtstrahl 28' noch gezielter auf die Zielmarke 18 geführt wird.

Besonders bevorzugt ist in diesem Falle, wenn die Höhe des Streifenwellenleiters 20' über dessen Länge nicht konstant ist, wie in Figur 2 mit h' angedeutet. Diese Maßnahme eröffnet die Möglichkeit, die Einkopplung des Lichtes von der an der linken Seitenfläche 24, d.h. der an Stirnseite angebrachten Lichtquelle 26 zu optimieren. Der Streifenwellenleiter 20' kann insbesondere als so genanntes Koppelhorn mit einer Höhe h' ausgebildet werden, die von der Lichtquelle 26 zur Zielmarke 18 hin abnimmt.

## Patentansprüche

1. Beleuchtete Zielvorrichtung für ein Beobachtungsgerät mit einer Strichplatte (14), einer an der Strichplatte (14) angeordneten Zielmarke (18) und einer Lichtquelle (26), die über einen Lichtleiter auf die Zielmarke (18) gerichtet ist, wobei die Strichplatte (14) aus Glas besteht, ferner die Zielmarke (18) im Bereich des Lichtleiters in die Strichplatte (14) eingearbeitet ist und das Licht der Lichtquelle (26) an Grenzflächen des Lichtleiters totalreflektiert wird, **dadurch gekennzeichnet, dass** der Lichtleiter als Schichtwellenleiter (20) oder Streifenwellenleiter (20') durch Ionenaustausch im Glas der Strichplatte (14) erzeugt ist.

2. Zielvorrichtung nach Anspruch 1, **dadurch gekennzeichnet, dass** der Wellenleiter in einer breiten Seite (16) der Strichplatte (14) vorbestimmter Tiefe (b) ausgebildet ist.

3. Zielvorrichtung nach Anspruch 1, **dadurch gekennzeichnet, dass** der Wellenleiter in einer breiten Seite (16') der Strichplatte (14') vorbestimmter Tiefe (b) und Höhe (h) ausgebildet ist.

4. Zielvorrichtung nach Anspruch 3, **dadurch gekennzeichnet, dass** die Höhe (h') sich in Längsrichtung des Streifenwellenleiters (20') ändert.

5. Zielvorrichtung nach Anspruch 4, **dadurch gekennzeichnet, dass** der Streifenwellenleiter (20') als Koppelhorn mit zu der Zielmarke (18) hin abnehmender Höhe (h') ausgebildet ist.

6. Zielvorrichtung nach einem oder mehreren der Ansprüche 2 bis 5, **dadurch gekennzeichnet, dass** die Lichtquelle (26) an eine Schmalseite der Strichplatte (14) angeschlossen ist.

7. Zielvorrichtung nach einem oder mehreren der Ansprüche 1 bis 6, **dadurch gekennzeichnet, dass** die Zielmarke (18) in die Strichplatte (14) eingearbeitet, insbesondere eingeätzt oder eingraviert ist.

## Claims

1. An illuminated aiming device for an observation instrument, comprising a reticle plate (14), an aiming mark (18) arranged at the reticle plate (14), and a light source (26) directed onto the aiming mark (18) via a light guide, wherein the reticle plate (14) consists of glass, wherein further the aiming mark (18) is worked into the reticle plate (14) in the region of the light guide, and the light of the light source (26) is reflected by total internal reflection at boundary faces of the light guide, **characterized in that** the light guide is made as a slab waveguide (20) or as a strip waveguide (20') by ion exchange in the glass of the reticle plate (14).

2. The aiming device of claim 1, **characterized in that** the waveguide is configured within a broad side (16) of the reticle plate (14) with a predetermined depth (b).

3. The aiming device of claim 1, **characterized in that** the waveguide is configured within a broad side (16') of the reticle plate (14') with a predetermined depth (b) and height (h).

4. The aiming device of claim 3, **characterized in that** the height (h') changes in the longitudinal direction of the strip waveguide (20').

5. The aiming device of claim 4, **characterized in that** the strip waveguide (20') is configured as a coupling horn having a height (h') decreasing towards the aiming mark (18).

6. The aiming device of any one of claims 2 through 5, **characterized in that** the light source (26) is connected to a narrow side of the reticle plate (15).

7. The aiming device of any one of claims 1 through 6, **characterized in that** the aiming mark (18) is worked into the reticle plate (14), in particular etched or engraved.

## Revendications

1. Viseur éclairé pour un appareil d'observation, comportant un réticule (14), un repère de visée (18) disposé sur le réticule (14) et une source lumineuse (26) qui est dirigée sur le repère de visée (18) par l'intermédiaire d'un conducteur optique, le réticule (14) étant réalisé en verre, le repère de visée (18) étant inséré, en outre, dans le réticule (14) dans la zone du conducteur optique, et la lumière de la source lumineuse (26) étant totalement réfléchie sur les interfaces du conducteur optique, **caractérisé en ce que** le conducteur optique est réalisé sous la forme d'un guide d'ondes lamellé (20) ou d'un guide d'ondes à ruban (20') par échange d'ions dans le verre du réticule (14).

2. Viseur selon la revendication 1, **caractérisé en ce que** le guide d'ondes est réalisé avec une profondeur (b) prédéterminée dans un côté large (16) du réticule (14).

3. Viseur selon la revendication 1, **caractérisé en ce que** le guide d'ondes est réalisé avec une profondeur (b) et une hauteur (h) prédéterminées dans un côté large (16) du réticule (14).

4. Viseur selon la revendication 3, **caractérisé en ce que** la hauteur (h') varie dans la direction longitudinale du guide d'ondes à ruban (20').

5. Viseur selon la revendication 4, **caractérisé en ce que** le guide d'ondes à ruban (20') est réalisé sous la forme d'une corne de couplage avec une hauteur (h') diminuant en allant vers le repère de visée (18).

6. Viseur selon une ou plusieurs des revendications 2 à 5, **caractérisé en ce que** la source lumineuse (26) est raccordée à un côté étroit du réticule (14).

7. Viseur selon une ou plusieurs des revendications 1 à 6, **caractérisé en ce que** le repère de visée (18) est inséré dans le réticule (14), en particulier par mordançage ou par gravure.
